# EUROPÄISCHE PATENTSCHRIFT

(11) **EP 3 311 112 B1**
(45) Veröffentlichungstag und Bekanntmachung des Hinweises auf die Patenterteilung: **05.02.2020**
(21) Anmeldenummer: 16727486.9
(22) Anmeldetag: 07.06.2016
(51) Int. Cl.: G01D 1/10, G01D 5/20, H02P 6/17

(54) **VERFAHREN UND VORRICHTUNG ZUR VERARBEITUNG EINES SIGNALS**
METHOD AND DEVICE FOR PROCESSING A SIGNAL
PROCÉDÉ ET DISPOSITIF DE TRAITEMENT D'UN SIGNAL

(30) Priorität: 18.06.2015 DE 102015211247
(43) Veröffentlichungstag der Anmeldung: 25.04.2018
(73) Patentinhaber: Robert Bosch GmbH, 70442 Stuttgart (DE)
(72) Erfinder: UNGERMANN, Michael, 64285 Darmstadt (DE); LECHNER, Benjamin, 75242 Neuhausen (DE); ZIRKEL, Daniel, 75446 Wiernsheim-Serres (DE); RAICHLE, Daniel, 71665 Vaihingen (DE)
(86) Internationale Anmeldenummer: PCT/EP2016/062864
(87) Internationale Veröffentlichungsnummer: WO 2016/202637

(56) Entgegenhaltungen:
- DE-A1- 4 216 811
- DE-A1-102012 213 709
- US-B2- 6 906 494
- US-B2- 8 106 618
- JOSE J. RANGEL-MAGDALENO ET AL: "Novel Oversampling Technique for Improving Signal-to-Quantization Noise Ratio on Accelerometer-Based Smart Jerk Sensors in CNC Applications", SENSORS, Bd. 9, Nr. 5, 19. Mai 2009 (2009-05-19), Seiten 3767-3789, XP055292219, CH ISSN: 1424-8220, DOI: 10.3390/s90503767

## Beschreibung

Die vorliegende Erfindung betrifft ein Verfahren und eine Vorrichtung zur Verarbeitung eines Signals. Insbesondere betrifft die vorliegende Erfindung die Verarbeitung eines Signals bei gleichzeitiger Konvertierung eines Verarbeitungszeitrasters.

### Stand der Technik

Die Druckschrift "Novel Oversampling Techniqu for Improving Signal-to-Quantization Noise Ratio on Acceleromater-Based Smart Jerk Sensors in CNC Application" (Jose J. Rangel-Magdaleon et al., SENSORS, Band 9, Nr. 5, 19. Mai 2009, Seiten 3767-3789; ISSN: 1424-8220, DOI 10.3390/s90503767) offenbart ein Verfahren zur reduktion des Signal-zu-Rauschverhältnisses für beschleunigungsbasierte Sensoren.

Die Druckschrift US 6 906 494 B2 offenbart ein Steuergerät mit einem Sensor zur Bestimmung des magnetischen Flusses zur Bestimmung einer Rotorposition. Mittels eines Differenziergliedes wird aus ermittelten Positionen die Geschwindigkeit des Rotors ermittelt. Diese wird als Regelgröße für einen Geschwindigkeitsregler verwendet.

Elektro- und Hybridfahrzeuge gewinnen zunehmend an Bedeutung. Zur Regelung von permanenterregten Synchronmaschinen (PSM) und elektrisch erregten Synchronmaschinen (ESM), wie sie in solchen Fahrzeugen eingesetzt werden, ist die Kenntnis des Rotorlagewinkels derartiger Maschinen erforderlich. Weiterhin ist zur Regelung von Asynchronmaschinen (ASM) die Kenntnisse der elektrischen Frequenz des Antriebs notwendig. Zur Ermittlung des Rotorlagewinkels bzw. der elektrischen Frequenz können verschiedene Sensorarten eingesetzt werden. Zum Beispiel sind Sensoren auf Basis des Wirbelstrom-Effekts, Resolver oder digitale Winkelgeber möglich.

Ein Resolver wird dabei beispielsweise mit einem vorzugsweise sinusförmigen Trägersignal angeregt. Als Empfängersignale des Resolvers erhält man dabei in der Regel gestörte, amplitudenmodulierte Spannungen, aus deren Einhüllende die Information über die Rotorlage gewonnen werden kann.

Die deutsche Patentanmeldung DE 10 2011 078 583 A1 offenbart beispielsweise eine Auswertung von Resolver-Sensorsignalen in einem Fahrzeug. Ein Resolver-Sensor nimmt hierzu eine Drehbewegung eines Rotors auf, und ein Prozessorelement verarbeitet die sinus- bzw. kosinusförmigen Ausgangssignale des Resolvers.

Aufgrund äußerer Rahmenbedingungen ist es dabei möglich, dass ein digitalisiertes Winkelsignal von einem Winkelsignalgeber, wie zum Beispiel einem Resolver, innerhalb eines Prozessorelements in einem Zeitraster bereitgestellt wird, welches sich von dem Zeitraster für die Weiterverarbeitung der Winkelsignale unterscheidet. Beispielsweise können die Spezifikationen für ein integriertes Bauteil zur Auswertung der Ausgabesignale aus einem Winkelsignalgeber ein Rechenraster erfordern, welches nicht zu dem Rechenraster für die Weiterverarbeitung der Winkelsignale korrespondiert.

Daher besteht ein Bedarf nach einer Vorrichtung und einem Verfahren für eine effiziente Verarbeitung von Winkelsignalen, die mit einem variablen Zeitraster bereitgestellt worden sind.

### Offenbarung der Erfindung

Gemäß einem ersten Aspekt schafft die vorliegende Erfindung eine Vorrichtung zur Verarbeitung eines Signals mit den Merkmalen des unabhängigen Patentanspruchs 1.

Gemäß einem weiteren Aspekt schafft die vorliegende Erfindung ein Verfahren zur Verarbeitung eines Signals mit den Merkmalen des unabhängigen Patentanspruchs 7.

### Vorteile der Erfindung

Der vorliegenden Erfindung liegt die Idee zugrunde, bei der Verarbeitung von Signalen, insbesondere bei der Filterung der Signale, wie zum Beispiele Winkelsignale von einem Winkellageber, diese Verarbeitung gleichzeitig mit einem Übergang des Rechenrasters zu kombinieren. Hierzu werden die Signale in dem ursprünglichen Zeitraster erfasst, in dem die Signale zunächst bereitgestellt worden sind. Dieses Zeitraster kann beispielsweise durch die Bauelemente für die Beschaltung bzw. die Auswertung der Signale aus einem Winkelsignalgeber vorgegeben sein. Insbesondere können derartige Bauelemente, wie zum Beispiel integrierte Schaltungen oder ähnliches, nur für ein ganz bestimmtes Abtastraster oder einen vorbestimmten Bereich für ein Abtastraster spezifiziert sein. Soll die weitere Signalverarbeitung, wie zum Beispiel die Regelung eines rotatorischen Systems, insbesondere eines elektrischen Antriebs oder ähnlichem, jedoch in einem davon abweichenden Zeitraster erfolgen, so kann gemäß der vorliegenden Erfindung der Übergang von dem ersten Zeitraster, in dem die Signale bereitgestellt werden, in das zweite Zeitraster, mit dem die Signale weiterverarbeitet werden sollen, im Zuge der Verarbeitung der Signale erfolgen. Eine solche Verarbeitung der Signale kann beispielsweise eine Filterung der Rohsignale sein. Somit kann durch die Filterung der Rohsignale gleichzeitig ein Übergang des Zeitrasters erfolgen.

Für den zuverlässigen Übergang des Rechenrasters muss die Eingangsgröße dabei nicht zwingend signifikant schneller abgetastet werden, als es das Zeitraster der Ausgangsgröße erfordert. Es sollte lediglich sichergestellt sein, dass zwischen zwei Zeitpunkten des zweiten Zeitrasters mindestens eine Aktualisierung der Eingangsgröße stattgefunden hat.

Ferner muss die Eingangsgröße nicht mit äquidistanter Schrittweite abgetastet werden. Variable Schrittweiten sind darüber hinaus ebenso möglich, sofern die Schrittweite bekannt ist.

Da der dynamische Anteil der Verarbeitung der Signale nach dem Übergang des Rechenrasters mit einer konstanten Abtastschrittweite verarbeitet wird, können Ansätze einer linearen, zeitdiskreten Regelungstechnik angewendet werden.

Gemäß einer Ausführungsform umfasst die Verarbeitungseinrichtung ein PT1-Glied. PT-Glieder höherer Ordnung sind darüber hinaus ebenso möglich. Ferner sind ebenfalls weitere dynamische Verarbeitungen der Signale nach dem Übergang des Rechenrasters möglich.

Gemäß einer weiteren Ausführungsform ist die Differenzier-Einrichtung dazu ausgelegt, einen Wert eines von der Erfassungseinrichtung erfassten Signals von einem Wert zu subtrahieren, der von der Erfassungseinrichtung zuvor erfasst worden ist. Ferner kann die Differenzier-Einrichtung diese Differenz durch die Differenz der zeitlichen Abstände der beiden erfassten Signale dividieren. Die so berechnete Winkeländerung kann für die Weiterverarbeitung und die Anpassung des Zeitrasters weiterverwendet werden.

Gemäß einer weiteren Ausführungsform ist die Differenzier-Einrichtung dazu ausgelegt, das differenzierte Signal in einem zweiten Zeitraster in die Verarbeitungseinrichtung auszugeben. Die differenzierten Signale werden somit für die Weiterverarbeitung auf das erforderliche Zeitraster angepasst.

Gemäß einer weiteren Ausführungsform ist das erste Abtastraster variabel. In diesem Fall müssen die variablen Zeitabstände an der Differenzier-Einrichtung bereitgestellt werden, um eine korrekte Differenzierung der Signale ausführen zu können. Alternativ kann das von der Erfassungseinrichtung erfasste Signal auch in einem vorbestimmten konstanten Zeitraster erfasst werden. In diesem Fall reicht die Kenntnis des vorbestimmten Zeitrasters für die Differenzierung der Signalwerte.

Gemäß einer weiteren Ausführungsform umfasst der Schritt zum Verarbeiten des differenzierten Signals in dem Verfahren zur Verarbeitung des Signals eine Tiefpassfilterung. Darüber hinaus sind auch beliebige weitere Verarbeitungsschritte, insbesondere beliebige Filterschritte für die Verarbeitung des Signals möglich. Insbesondere sind Verarbeitungsschritte möglich, die ein fest vorgegebenes Zeitraster erfordern.

Gemäß einem weiteren Aspekt schafft die vorliegende Erfindung ein Antriebssystem mit einer elektrischen Maschine, einem Drehwinkelsensor und einer erfindungsgemäßen Vorrichtung zur Verarbeitung eines Signals. Die elektrische Maschine ist dabei mit einer Antriebswelle gekoppelt. Ferner ist der Drehwinkelsensor mit der Antriebswelle gekoppelt. Der Drehwinkelsensor ist darüber hinaus dazu ausgelegt, ein zu der Winkellage der Antriebswelle korrespondierendes Signal bereitzustellen.

Gemäß einer weiteren Ausführungsform umfasst der Drehwinkelsensor einen Resolver.

Weitere Ausführungsformen und Vorteile der vorliegenden Erfindung ergeben sich aus der nachfolgenden Beschreibung unter Bezug auf die beigefügten Zeichnungen.

### Kurze Beschreibung der Zeichnungen

Es zeigen:
- Figur 1:: eine schematische Darstellung eines elektrischen Antriebssystems gemäß einer Ausführungsform;
- Figur 2:: eine schematische Darstellung einer Vorrichtung zur Verarbeitung eines Signals gemäß einer Ausführungsform; und
- Figur 3:: eine schematische Darstellung eines Ablaufdiagramms, wie es einem Verfahren gemäß einer Ausführungsform zugrunde liegt.

### Beschreibung von Ausführungsformen

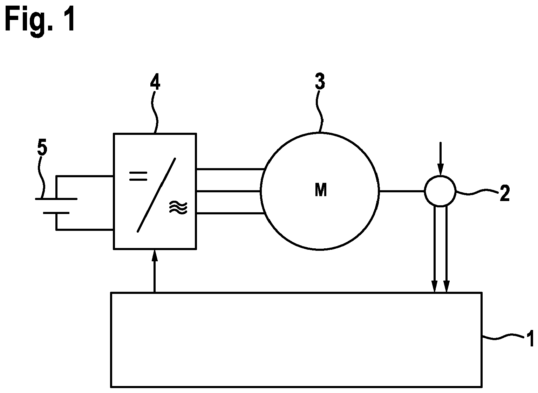

Figur 1 zeigt eine schematische Darstellung eines elektrischen Antriebssystems gemäß einer Ausführungsform. Eine elektrische Maschine 3 wird von einer elektrischen Energiequelle 5 über einen Stromrichter 4 gespeist. Beispielsweise kann es sich bei der elektrischen Energiequelle 5 um eine Traktionsbatterie eines Elektrofahrzeugs handeln. Bei der elektrischen Maschine 3 kann es sich beispielsweise um eine permanent erregte Synchronmaschine, eine elektrische erregte Synchronmaschine oder aber auch um eine Asynchronmaschine handeln. Grundsätzlich sind darüber hinaus auch andere elektrische Maschinen möglich. Die hier dargestellte Ausführungsform einer dreiphasigen elektrischen Maschine 3 stellte dabei nur eine beispielhafte Ausführungsform dar. Darüber hinaus sind auch elektrische Maschinen mit einer von drei abweichenden Anzahl von Phasen möglich. Der Stromrichter 4 konvertiert die von der elektrischen Energiequelle 5 bereitgestellte elektrische Energie und stellt die konvertierte elektrische Energie zur Ansteuerung der elektrischen Maschine 3 bereit. Die Ansteuerung der elektrischen Maschine 3 kann dabei basierend auf Vorgaben bzw. Steuersignalen von der Steuervorrichtung 1 erfolgen. Darüber hinaus kann beim Abbremsen der elektrischen Maschine 3 auch kinetische Energie durch die elektrische Maschine 3 in elektrische Energie umgewandelt werden und diese elektrische Energie über den Stromrichter 4 in einen elektrischen Energiespeicher der Energiequelle 5 eingespeist werden.

Für die Regelung einer permanent- oder elektrisch erregten Synchronmaschine ist dabei die Kenntnis der Lage des Rotors in dieser Maschine erforderlich. Ferner ist für die Regelung von Asynchronmaschinen die Kenntnis der Geschwindigkeit einer solchen Maschine notwendig. Hierzu kann die elektrische Maschine 3 mit einem Drehwinkelgeber 2 gekoppelt werden. Beispielsweise kann der Drehwinkelgeber 2 mit der Antriebsachse der elektrischen Maschine 3 gekoppelt werden. Beispielsweise sind zur Bestimmung der Rotorlage und/oder der Geschwindigkeit der Maschine 3 Sensoren auf Basis des Wirbelstrom-Effekts, digitale Winkelgeber oder sogenannte und Resolver möglich.

In einem Resolver sind in der Regel in einem Gehäuse zwei um 90° elektrisch versetzte Sensorwicklungen angeordnet. Grundsätzlich sind verschiedene Alternativen zur Ermittlung der Winkellage möglich, von denen nachfolgend exemplarisch eine Möglichkeit beschrieben wird. Beispielsweise kann eine weitere Erregerwicklung des Resolvers mit einer sinusförmigen Wechselspannung angeregt werden. Die Amplituden der in den beiden Sensorwicklungen des Resolvers induzierten Spannungen sind dabei abhängig von der Winkellage des Rotors und entsprechen dem Sinus und dem Kosinus der Winkellage des Rotors. Somit kann die Winkellage des Rotors aus dem Arkustangens (arctan) der Signale der beiden Sensorwicklungen des Resolvers berechnet werden.

Darüber hinaus kann die Winkellage des Rotors auch durch beliebige weitere Rotorlagesensoren erfasst und bereitgestellt werden. Beispielsweise sind auch Lagesensoren unter Verwendung eines Wirbelstroms oder digitale Lagesignale möglich.

Ferner ist die vorliegende Erfindung nicht auf Winkelsignale von einem Winkellagegeber beschränkt, sondern kann auch auf beliebige weitere Signale insbesondere auf weitere Winkelbasierte Signale angewendet werden. Grundsätzlich ist eine Anwendung des erfindungsgemäßen Prinzips auf beliebige Signalverläufe möglich, die in einem ersten Zeitraster bereitgestellt bzw. erfasst werden und anschließend in einem zweiten, vorbestimmten Zeitraster weiterverarbeitet werden sollen. Die nachfolgende Beschreibung unter Bezug auf Winkelsignale stellt daher keine Einschränkung dar, sondern soll nur dem besseren Verständnis der Erfindung dienen.

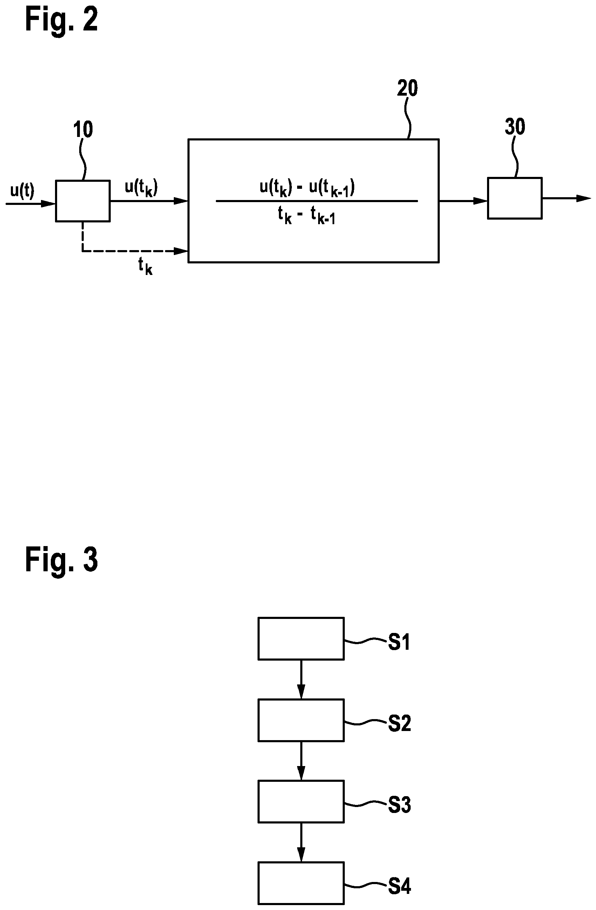

Figur 2 zeigt eine schematische Darstellung eines Ausführungsbeispiels für eine Vorrichtung zur Verarbeitung eines Signalverlaufs. Zunächst wird ein Signalverlauf, beispielsweise ein Signalverlauf eines Winkelsignals von einer Erfassungseinrichtung 10 erfasst. Die Erfassung dieses Signalverlaufs erfolgt dabei in einer ersten Abtastrate gemäß einem ersten Zeitraster. Beispielsweise kann es sich bei der Erfassungseinrichtung 10 um einen Analog-Digital-Wandler handeln, der ein kontinuierliches Eingangssignal zu Zeitpunkten gemäß des ersten Zeitrasters abtastet und diese abgetasteten Signalwerte in digitale Signalwerte konvertiert. Bei dem ersten Zeitraster kann es sich dabei beispielsweise um ein festes Zeitraster mit fest vorbestimmten Zeitintervallen zwischen den einzelnen Abtastzeitpunkten handeln. Darüber hinaus ist es auch möglich, das erste Zeitraster zu variieren, das heißt die zeitlichen Abstände zwischen zwei aufeinanderfolgenden Abtastungen des Eingangssignals zu verändern. Die Anpassung des ersten Zeitrasters kann dabei beispielsweise von einer externen Steuervorrichtung (nicht dargestellt) vorgegeben werden. Die Randbedingungen für die Wahl des ersten Zeitrasters in Bezug auf das zweite Zeitraster für die nachfolgend näher erläuterte Weiterverarbeitung werden weiter unten noch näher erläutert. Die abgetasteten Signalwerte u(tₖ) werden daraufhin gemeinsam mit den Zeitpunkten tₖ der Abtastung einer Differenzier-Einrichtung 20 bereitgestellt. Die Differenzier-Einrichtung 20 empfängt die abgetasteten Signalwerte u(tₖ). Gegebenenfalls kann die Differenzier-Einrichtung 20 dabei eine vorgegebene Anzahl von abgetasteten Signalwerten u(tₖ) speichern. Auf diese Weise kann die Differenzier-Einrichtung 20 auch auf voraufgegangene abgetastete Signalwerte u(tₖ) zurückgreifen. Beispielsweise kann eine vorbestimmte Anzahl von abgetasteten Signalwerten u(tₖ) in einem zyklischen Speicher zwischengespeichert werden. Aber auch jede beliebige andere Art zum Zwischenspeichern von Signalwerten ist darüber hinaus möglich. Werden die Signalwerte u(t) am Eingang der Eingangseinrichtung 10 mit einer fest vorgegebenen Abtastrate abgetastet, so kann die Differenzier-Einrichtung 20 unter Kenntnis dieser fest vorgegebenen Abtastrate auch auf die zeitlichen Abstände der einzelnen erfassten Signalwerte u(tₖ) zurückschließen. In diesem Fall können die Zeitdifferenzen zwischen zwei aufeinanderfolgenden abgetasteten Signalwerten fest in der Differenzier-Einrichtung 20 hinterlegt sein. Alternativ können insbesondere bei einem variablen Abtastraster für die Abtastung des Eingangssignals an der Erfassungseinrichtung 10 auch die jeweiligen Zeitpunkte tₖ, zu denen die Signalwerte u(tₖ) abgetastet worden sind, an die Differenzier-Einrichtung 20 übertragen werden. In diesem Fall können die Abtastzeitpunkte tₖ zusammen mit den jeweiligen abgetasteten Signalwerten u(tₖ) zusammen in einem Speicher der Differenzier-Einrichtung 20 abgespeichert werden. Zum Differenzieren der abgetasteten Signalwerte kann die Differenzier-Einrichtung 20 dabei eine Differenz zweier abgetasteter Signalwerte bilden und diese Differenz durch die Differenz der Abtastzeitpunkte dividieren. Auf diese Weise berechnet die Differenzier-Einrichtung 20 einen vom Abtastzeitraster unabhängigen Differenzenquotienten.

Dieser Differenzenquotient kann anschließend in einem für die Weiterverarbeitung in der Verarbeitungseinrichtung 30 erforderlichen zweiten Zeitraster an die Verarbeitungseinrichtung 30 weitergegeben werden. Die Eingangsgröße am Eingang der Erfassungsvorrichtung 10 muss dabei nicht signifikant schneller abgetastet werden als das zweite Zeitraster der Verarbeitungseinrichtung 30. Vielmehr muss lediglich sichergestellt sein, dass zwischen zwei Zeitpunkten des zweiten Zeitrasters möglichst eine Aktualisierung, das heißt eine Abtastung durch die Erfassungseinrichtung 10 erfolgt.

Nach dem Übergang des in der Differenzier-Einrichtung 20 gebildeten Differenzenquotients in das zweite Zeitraster der Verarbeitungseinrichtung 30 erfolgt dabei die Weiterverarbeitung des Differenzenquotienten in dem zweiten Zeitraster der Verarbeitungseinrichtung 30. Diese Weiterverarbeitung des Differenzenquotienten durch die Verarbeitungseinrichtung 30 kann beispielsweise eine Filterung, insbesondere eine Tiefpassfilterung umfassen. Beispielsweise kann die Verarbeitungseinrichtung 30 ein PTn-Glied für die Filterung des Winkelsignals umfassen. Aber auch beliebige andere Verarbeitungsschritte für die Filterung des Winkelsignals, insbesondere des Differenzenquotienten des Winkelsignals sind darüber hinaus ebenso möglich. Da die Ausgabe des Differenzenquotienten aus der Differenzier-Einrichtung 20 mit der konstanten Schrittweite des zweiten Zeitrasters erfolgt, können für die Weiterverarbeitung beliebige Ansätze einer linearen, zeitdiskreten Regelungstechnik angewendet werden.

Figur 3 zeigt eine schematische Darstellung eines Verfahrens zur Verarbeitung eines Winkelsignals, wie es einer Ausführungsform zugrunde liegt. In einem ersten Schritt S1 wird zunächst ein Winkelsignal mit einer ersten Abtastrate in einem ersten Zeitraster erfasst. Anschließend wird in Schritt S2 das erfasste Winkelsignal in dem ersten Zeitraster differenziert. Hierzu wird, wie bereits oben beschrieben, der Differenzenquotient von Winkelsignal und Abtastzeitpunkten gebildet.

In Schritt S3 wird das differenzierte Winkelsignal in einem zweiten Zeitraster ausgegeben und in Schritt S4 das ausgegebene differenzierte Winkelsignal, das heißt der Differenzenquotient des Winkelsignals in dem zweiten Zeitraster verarbeitet.

Wie bereits zuvor beschrieben, sollte dabei sichergestellt sein, dass zwischen zwei Zeitpunkten in dem Rechenraster der Verarbeitung des Differenzenquotienten mindestens eine Aktualisierung des abgetasteten Winkelsignals erfolgt.

Zusammenfassend betrifft die vorliegende Erfindung eine Signalverarbeitung von Signalen mit einer gleichzeitigen Konvertierung des Bearbeitungszeitrasters. Ein Signal wird hierzu in einem ersten Zeitraster erfasst bzw. bereitgestellt. Nach Bildung des Differenzenquotienten in dem ersten Zeitraster erfolgt eine Ausgabe des Differenzenquotienten in einem zweiten Zeitraster, in dem die Weiterverarbeitung des Signals, insbesondere des Differenzenquotienten erfolgt. Die Signalverarbeitug kann insbesondere auf Winkelsignale angewendet werden.

## Patentansprüche

1. Vorrichtung zur Verarbeitung eines Signals, mit:
einer Erfassungseinrichtung (10), die dazu ausgelegt ist, ein Signal mit einer ersten Abtastrate in einem ersten Zeitraster zu erfassen;
einer Differenzier-Einrichtung (20), die dazu ausgelegt ist, das erfasste Signal in dem ersten Zeitraster zu differenzieren und Differenzenquotienten zu berechnen und in einem zweiten Zeitraster auszugeben; und
eine Verarbeitungseinrichtung (30), die dazu ausgelegt ist, das differenzierte Signal in dem zweiten Zeitraster zu verarbeiten, wobei die Differenzenquotienten tiefpassgefiltert werden,
wobei die zeitlichen Abstände in dem ersten Zeitraster kleiner sind als die zeitlichen Abstände in dem zweiten Zeitraster.

2. Vorrichtung nach Anspruch 1, wobei die Verarbeitungseinrichtung (30) ein PT1-Glied umfasst.

3. Vorrichtung nach Anspruch 1 oder 2, wobei die Differenzier - Einrichtungen (20) dazu ausgelegt ist, einen Wert eines von der Erfassungseinrichtung erfassten Signals von einem Wert zu subtrahieren, der von der Erfassungseinrichtungen zuvor erfasst worden ist, und die Differenzen durch den zeitlichen Abstand der beiden erfassten Signals zu dividieren.

4. Vorrichtung nach einem der Ansprüche 1 bis 3, wobei die Differenzier-Einrichtung (20) dazu ausgelegt ist, das differenzierte Signal in dem zweiten Zeitraster an die Verarbeitungseinrichtung auszugeben.

5. Vorrichtung nach einem der Ansprüche 1 bis 4, wobei die erste Abtastrate in dem ersten Zeitraster variabel ist.

6. Antriebssystem, mit:
einer elektrischen Maschine (3), die mit einer Antriebswelle gekoppelt ist;
einen Drehwinkelsensor (2), der mit der Antriebswelle gekoppelt ist, und der dazu ausgelegt ist, ein zu der Winkellage der Antriebswelle korrespondierendes Signal bereitzustellen; und
eine Vorrichtung zur Verarbeitung eines Signals nach einem der Ansprüche 1 bis 5.

7. Verfahren zur Verarbeitung eines Signals, mit den Schritten:
Erfassen (S1) eines Signals mit einer ersten Abtastrate in einem ersten Zeitraster;
Differenzieren (S2) des erfassten Signals in dem ersten Zeitraster und berechnen von Differenzenquotienten;
Ausgeben (S3) des differenzierten Signals in einem zweiten Zeitraster; und
Verarbeiten (S4) des ausgegebenen differenzierten Signals in dem zweiten Zeitraster, wobei die Differenzenquotienten tiefpassgefiltert werden,
wobei die zeitlichen Abstände in dem ersten Zeitraster kleiner sind als die zeitlichen Abstände in dem zweiten Zeitraster.

## Claims

1. Device for processing a signal, having:
a detecting device (10), which is designed to detect a signal with a first sampling rate in a first time grid;
a differentiating device (20), which is designed to differentiate the detected signal in the first time grid and calculate difference quotients and output them in a second time grid; and
a processing device (30), which is designed to process the differentiated signal in the second time grid, the difference quotients being low-pass filtered,
the time intervals in the first time grid being smaller than the time intervals in the second time grid.

2. Device according to Claim 1, the processing device (30) comprising a PT1 element.

3. Device according to Claim 1 or 2, the differentiating devices (20) being designed to subtract a value of a signal detected by the detecting device from a value that has previously been detected by the detecting devices, and to divide the differences by the time interval of the two detected signals.

4. Device according to one of Claims 1 to 3, the differentiating device (20) being designed to output the differentiated signal in the second time grid to the processing device.

5. Device according to one of Claims 1 to 4, the first sampling rate in the first time grid being variable.

6. Drive system, having:
an electrical machine (3), which is coupled to a drive shaft;
a rotational angle sensor (2), which is coupled to the drive shaft and is designed to provide a signal corresponding to the angular position of the drive shaft; and
a device for processing a signal according to one of Claims 1 to 5.

7. Method for processing a signal, having the steps of:
detecting (S1) a signal with a first sampling rate in a first time grid;
differentiating (S2) the detected signal in the first time grid and calculating difference quotients;
outputting (S3) the differentiated signal in a second time grid; and
processing (S4) the output differentiated signal in the second time grid, the difference quotients being low-pass filtered,
the time intervals in the first time grid being smaller than the time intervals in the second time grid.

## Revendications

1. Dispositif de traitement d'un signal, comprenant :
un moyen de détection (10) conçu pour détecter un signal à une première fréquence d'échantillonnage dans une première tranche de temps ;
un moyen de différentiation (20) conçu pour différentier le signal détecté dans la première tranche de temps et pour calculer des quotients différentiels et les délivrer dans une seconde tranche de temps ; et
un moyen de traitement (30) conçu pour traiter le signal différentié dans la seconde tranche de temps, dans lequel les quotients différentiels sont filtrés par filtrage passe-bas,
dans lequel les intervalles de temps dans la première tranche de temps sont plus petits que les intervalles de temps dans la seconde tranche de temps.

2. Dispositif selon la revendication 1, dans lequel le moyen de traitement (30) comprend un élément PT1.

3. Dispositif selon la revendication 1 ou 2, dans lequel les moyens de différentiation (20) est conçu pour soustraire une valeur d'un signal détecté par le moyen de détection à une valeur précédemment détectée par les moyens de détection et pour diviser les différences par l'intervalle de temps entre les deux signaux détectés.

4. Dispositif selon l'une des revendications 1 à 3, dans lequel le moyen de différentiation (20) est conçu pour délivrer le signal différentié au moyen de traitement dans la seconde tranche de temps.

5. Dispositif selon l'une des revendications 1 à 4, dans lequel la première fréquence d'échantillonnage dans la première tranche de temps est variable.

6. Système d'entraînement, comprenant :
une machine électrique (3) couplée à un arbre d'entraînement ;
un capteur d'angle de rotation (2) couplé à l'arbre d'entraînement et conçu pour fournir un signal correspondant à la position angulaire de l'arbre d'entraînement ; et
un dispositif de traitement d'un signal selon l'une des revendications 1 à 5.

7. Procédé de traitement d'un signal, comprenant les étapes suivantes :
détection (S1) d'un signal à une première fréquence d'échantillonnage dans une première tranche de temps ;
différentiation (S2) du signal détecté dans la première tranche de temps et calcul de quotients différentiels ;
délivrance (S3) du signal différentié dans une seconde tranche de temps ; et
traitement (S4) du signal différentié délivré dans la seconde tranche de temps, dans lequel les quotients différentiels sont filtrés par filtrage passe-bas,
dans lequel les intervalles de temps dans la première tranche de temps sont plus petits que les intervalles de temps dans la seconde tranche de temps.
